# EUROPÄISCHE PATENTANMELDUNG

(11) **EP 4 682 035 A1**
(43) Veröffentlichungstag der Anmeldung: **21.01.2026**
(21) Anmeldenummer: 25186916.0
(22) Anmeldetag: 02.07.2025
(51) Int. Cl.: B62K 21/20, B62K 25/16

(54) **FAHRRADGABEL MIT EINEM FEDERELEMENT UND FAHRRAD**

(30) Priorität: 19.07.2024 DE 102024120678
(71) Anmelder: Muff, André Armando, 8802 Kilchberg (CH)
(72) Erfinder: Muff, André Armando, 8802 Kilchberg (CH)
(74) Vertreter: Kohlmann, Kai

(57) **Zusammenfassung**

Fahrradgabel (2) mit einem Federelement (11), umfassend einen Gabelschaft (3), einen Gabelkopf (4) und im Abstand zueinander angeordnete Gabelholme (5) mit Ausfallenden (6) zur Befestigung des Vorderrades (7). Um eine wartungsarme, kostengünstige und verschleißfeste Federgabel zu schaffen, wird vorgeschlagen, ein zentrales Federelement in einen zweiteiligen Gabelkopf zu integrieren. Der obere Teil des Gabelkopfs, die Gabelkrone (8), ist drehfest mit dem Gabelschaft verbunden. Der untere Teil des Gabelkopfs, die Gabelbrücke (9), verbindet die Gabelholme (5) an den oberen Enden (10). Das Federelement ist unmittelbar zwischen der Gabelkrone und der Gabelbrücke angeordnet und die Gabelkrone und die Gabelbrücke sind über ein versetzt zur Längsachse des Gabelschaftes angeordnetes Drehgelenk (12) miteinander verbunden.

## Beschreibung

Die Erfindung betrifft eine Fahrradgabel mit einem Federelement, umfassend einen Gabelschaft, einen Gabelkopf und im Abstand zueinander angeordnete Gabelholme mit Ausfallenden zur Befestigung des Vorderrades. Außerdem betrifft die Erfindung ein Fahrrad, das mit einer erfindungsgemäßen Fahrradgabel ausgestattet ist.

Die Fahrradgabel ist ein am Fahrrad drehbar befestigtes Bauteil, welches das Vorderrad mit dem Rahmen verbindet. An den Gabelholmen, auch als Gabelscheiden bezeichnet, sind an den unteren Enden Aufnahmen für die Achse der Fahrradnabe angebracht, die sogenannten Ausfallenden. Der Bereich, an dem die Gabelholme zusammentreffen und mit dem Gabelschaft verbunden sind, wird als Gabelkopf bezeichnet. Mittels eines Steuersatzes wird der Gabelschaft drehbar im Steuerrohr des Fahrradrahmens gelagert.

Fahrradgabeln mit Federelementen, auch als Federgabeln bezeichnet, werden heute in einer Vielzahl von Fahrrädern, insbesondere E-Bikes verbaut. Federgabeln sind speziell konstruierte Fahrradgabeln, die über integrierte Federsysteme verfügen. Das Grundprinzip besteht darin, dass beim Überfahren von Unebenheiten die kinetische Energie durch elastische Elemente und ggf. Dämpfungseinrichtungen absorbiert wird. Federgabeln absorbieren Stöße und Vibrationen, was besonders auf unebenen Wegen oder bei längeren Fahrten den Komfort erheblich erhöht. Durch die bessere Bodenhaftung und Kontrolle über das Fahrrad wird die Sicherheit erhöht, da die Räder Unebenheiten besser folgen können. Die Federung entlastet die Hände, Arme und den Oberkörper, wodurch der Fahrer weniger schnell ermüdet.

Die am weitesten verbreitete Bauform einer Federgabel ist die Teleskopgabel. Die Federung besteht aus Standrohr und einem Gleitrohr, die sich beim Einfedern ineinanderschieben. Das Standrohr ist das im Bezug zum Fahrradrahmen feststehende Rohr, also stets das obere Rohr. Das untere, bewegliche Rohr ist das Gleitrohr. Die Standrohre werden unter dem Gabelschaft durch den Gabelkopf zusammengehalten, der in der Mitte den Gabelschaft trägt. Die Teleskopgabeln können insbesondere als Stahlfedergabeln, Luftfedergabeln oder Ölfedergabeln ausgeführt sein.

Darüber hinaus sind beispielsweise Federgabeln mit Federung im Gabelschaft bekannt. Hier steckt die Federungstechnik nicht in den beiden Gabelholmen, sondern zentral im Gabelschaft. Eine solche Federgabel entspricht im Bereich der Gabelholme einer herkömmlichen starren Fahrradgabel, deren Gabelschaft allerdings koaxial mit Linear-Wälzlagern teleskopierend in einem Gabelschaftrohr gelagert ist, das wiederum im Steuerrohr des Rahmens gelagert ist. Um die Lenkkräfte zu übertragen, sind der Gabelschaft und das Gabelschaftrohr verdrehsicher, jedoch teleskopierbar miteinander verbunden. Diese Konstruktion bietet eine Reihe von Vorteilen. Ein Vorteil ist die größere Steifigkeit im Vergleich zur normalen Teleskopgabel, da nur im Steuerrohr zwei Teile ineinander gleiten. Dadurch sind diese Federgabeln fast so verwindungssteif wie starre Fahrradgabeln. Als Nachteil ist vor allen Dingen die Notwendigkeit eines Gabelschafts zu nennen, der nicht den Normmaßen entspricht.

Außerdem sind sogenannte Parallelogramm-Federgabeln bekannt, die aus einem starren Gabelunterteil umfassend die beiden Gabelholme bestehen, das über mindestens zwei Streben am Gabelschaft aufgehängt ist. Die Streben sind beidseitig drehbar gelagert, sodass sich die Gabel auf und ab bewegen kann. Die Streben bilden mit ihren Aufnahmen ein Parallelogramm.

Eine Parallelogramm-Federgabel ist beispielweise aus der DE 44 20 773 A1 bekannt. Die Federgabel weist über eine Gabelbrücke verbundene Gabelholme und einen für eine Aufnahme eines Gabelschaftrohres ausgebildeten Kopf auf, der mit der Gabelbrücke über parallelogrammartig angeordnete Streben gelenkig verbunden ist. Die Streben weisen mindestens einen Anlenkpunkt für ein Ende eines Feder-Dämpferelementes auf. Das Feder-Dämpferelement ist im ausgefederten Zustand parallel zu den Gabelholmen verlaufend angeordnet und anderen Ends an einem der Gabelholme angelenkt. Das Feder-Dämpferelement ist als ein Bauteil ausgebildet, das Federung und Dämpfung in einer Einheit integriert enthält.

Vorteilhaft bei Parallelogramm-Federgabeln ist das rasche Ansprechverhalten und die Möglichkeit, durch entsprechende Ausrichtung der Streben das Einfedern beim Bremsen gering zu halten. Problematisch sind jedoch die vielen verschleißempfindlichen Gelenke im Bereich der größten Hebelkräfte, aus denen eine geringe Stabilität resultiert.

Bekannte Federgabeln sind schwerer als starre Gabeln, was das Gesamtgewicht des Fahrrads erhöht; sie erfordern regelmäßige Wartung und können bei mangelnder Pflege schneller verschleißen. Federgabeln sind zudem in der Regel teurer als starre Gabeln.

Ausgehend von den bekannten Federgabeln liegt der Erfindung die Aufgabe zugrunde, eine wartungsarme, kostengünstige und verschleißfeste Federgabel vorzuschlagen.

Diese Aufgabe wird durch eine Fahrradgabel mit den Merkmalen des Anspruchs 1 gelöst. Vorteilhafte Ausgestaltungen der Erfindung ergeben sich aus den Merkmalen der abhängigen Ansprüche.

Die Lösung dieser Aufgabe basiert auf dem Gedanken, lediglich ein einziges, zentrales Federelement in den zweiteiligen Gabelkopf zu integrieren. Der obere Teil des Gabelkopfs, die Gabelkrone, ist drehfest mit dem Gabelschaft verbunden. Der untere Teil des Gabelkopfs, die Gabelbrücke, verbindet die Gabelholme an den oberen Enden. Das Federelement ist unmittelbar zwischen der Gabelkrone und der Gabelbrücke angeordnet.

Aufgrund der unmittelbaren Anordnung kreuzt eine Längsachse des Gabelschafts das Federelement. Außerdem kreuzt eine Längsmittelachse zwischen den oberen Enden der Gabelholme das Federelement. Die Längsmittelachse zwischen den beiden oberen Enden der Gabelholme bezeichnet eine gedachte Mittellinie, die genau in der Mitte des Abstands der beiden oberen Enden der Gabelholme und parallel dazu verläuft.

Anders ausgedrückt, das Federelement ist im Wesentlichen in Verlängerung der Längsachse des Gabelschaftes und im Wesentlichen in Verlängerung der vorgenannten Längsmittelachse angeordnet.

Die Gabelkrone und die Gabelbrücke sind über ein Drehgelenk derart miteinander verbunden, dass eine Drehbewegung um eine Drehgelenkachse des Drehgelenks eine Abstandsänderung der Gabelkrone gegenüber der Gabelbrücke bewirkt. Die Abstandsänderung ermöglicht das Ein- und Ausfedern des zwischen Gabelkrone und Gabelbrücke angeordneten Federelementes. Im voll ausgefederten Zustand des Federelementes ist der Abstand zwischen Gabelkrone und Gabelbrücke maximal. Mit dem Einfedern verringert sich der Abstand.

Um die Gestaltungsfreiheit der übrigen Rahmengeometrie nicht zu beeinträchtigen, ist das Drehgelenk in konstruktiv vorteilhafter Ausgestaltung der Erfindung in Fahrtrichtung eines mit der Fahrradgabel ausgerüsteten Fahrrades vorzugsweise vor dem Gabelschaft angeordnet. Durch den horizontalen Abstand zwischen der Drehgelenkachse und der Längsachse des Gabelschaftes wird der erforderliche Bauraum in dem Gabelkopf freigehalten, um das Federelement optimal unmittelbar zwischen Gabelkrone und Gabelbrücke anzuordnen.

Neben einer besonders kompakten Bauform der Federgabel ergibt sich aus dieser Anordnung des Drehgelenks eine optimale Krafteinleitung der auf die Gabelholme wirkenden Kräfte in das Federelement und den Gabelschaft. Zugleich wird die Stabilität der gefederten Fahrradgabel durch die starre Verbindung der Gabelholme durch die Gabelbrücke verbessert.

Die Kosten werden gegenüber herkömmlichen Federgabeln reduziert, weil weder die bisher in beiden Gabelholmen jeweils angeordneten Federelemente der Teleskopgabeln erforderlich sind, noch die vielen verschleißempfindlichen Gelenke und Streben im Bereich der größten Hebelkräfte der Parallelogramm-Federgabeln. Zugleich wird durch die erfindungsgemäße Lösung aufgrund der geringeren Anzahl der Komponenten das Gewicht reduziert.

Um das zentrale Federelement vorsehen zu können, sind die Gabelholme an den oberen Enden mittels einer Gabelbrücke fest miteinander verbunden. Die Gabelholme und die Gabelbrücke sind aus Stabilitätsgründen vorzugsweise einteilig, als ein Bauteil ausgeführt. Die integrierte Herstellung der Gabelholme und der Gabelbrücke als ein Bauteil, ist darüber hinaus herstellungstechnisch vorteilhaft, da keine nachträgliche Verbindung der Gabelholme mit der Gabelbrücke erforderlich ist. Dies schließt jedoch eine mehrteilige Bauweise nicht aus, bei der die Gabelbrücke als separates Element hergestellt und anschließend mit den Gabelholmen verbunden wird. Die nachträgliche Verbindung kann durch Schweißverfahren, Klebeverfahren oder mechanische Fügeverfahren, abhängig von den verwendeten Materialien der Fahrradgabel erfolgen.

Im Interesse geringer Kosten und der Wartungsarmut der Fahrradgabel ist das Federelement vorzugsweise eine Elastomerfeder, die sich einerseits an einer Aufnahme in der Gabelkrone und andererseits an einer Aufnahme in der Gabelbrücke abstützt. Die Elastomerfeder ist vorzugsweise monolithisch ausgeführt. Das Federelement wird als ein zusammenhängendes Bauteil hergestellt - etwa durch Gießen, Pressen oder Spritzgießen von Polyurethan oder einem anderen elastischen Material. Die Federwirkung resultiert aus den Materialeigenschaften sowie der gewählten Geometrie des Federelementes. Die Form wird so gestaltet, dass sie unter Belastung elastisch nachgibt und bei Entlastung in ihre Ausgangsform zurückkehrt. Die Elastomerfeder kann jedoch auch aus mehreren Schichten elastomeren Materials bestehen, die schichtweise zu einer kompakten Einheit zusammengefügt werden.

Um unsichere Betriebszustände der Fahrradgabel auszuschließen, ist der Schwenkwinkel des Drehgelenks um die Gelenkachse beschränkt. Die Beschränkung erfolgt mechanisch mittels Anschlagelementen derart, dass die Aufnahmen in der Gabelkrone und der Gabelbrücke auch bei Entlastung des Federelementes stets an dem Elastomerfederelement anliegen.

Eine konstruktiv vorteilhafte, raumsparend in das als Elastomerfeder ausgebildete Federelement integrierbare Beschränkung des Schwenkwinkels umfasst einen Bolzen, der sich durch einen Durchgang in der Elastomerfeder sowie Durchgänge in der Gabelkrone und der Gabelbrücke erstreckt, wobei sich der Bolzen bei Erreichen des größten Schwenkwinkels an einem Ende mit einem Gegenstück an der Gabelkrone und an dem anderen Ende mit einem Gegenstück an der Gabelbrücke als Widerlager abstützt. Das Gegenstück des Bolzens kann eine auf einen Gewindeabschnitt aufschraube Mutter und/oder ein Schraubenkopf sein.

Anstelle der Elastomerfeder kann als alternatives Federelement ein Federbein, vorzugsweise mit integrierter Dämpfung, an einem Ende an der Gabelkrone und an dem anderen Ende an der Gabelbrücke angelenkt sein. Es kommen sämtliche für Fahrräder bekannten Federbeine als Federelemente in Betracht, beispielsweise Luftfederbeine, Stahlfederbeine oder Ölfederbeine sowie deren Mischformen. Durch den Einsatz von Federbeinen erhöht sich jedoch gegenüber einer Elastomerfeder der konstruktive Aufwand und die Wartungsintensität.

Konstruktiv vorteilhaft wird die zu der Längsachse des Gabelschaftes versetzte Anordnung der Gelenkverbindung zwischen Gabelkrone und Gabelbrücke dadurch realisiert, dass
- die Gabelbrücke zwei im parallelen Abstand zueinander angeordnete Schwingen aufweist, die einen Ausleger der Gabelkrone umschließen,
- der Ausleger eine Achsaufnahme für die Drehgelenkachse aufweist,
- die beiden Schwingen endseitig miteinander fluchtende Achsaufnahmen für die Drehgelenkachse aufweisen,
- die Drehgelenkachse sich durch die miteinander fluchtenden Achsaufnahmen der beiden Schwingen und die Achsaufnahme des Auslegers erstreckt
- und die Drehgelenkachse quer zu Fahrtrichtung des Fahrrades verläuft.

Die beiden Schwingen und der Ausleger erstrecken sich vorzugsweise in Fahrtrichtung eines mit der Fahrradgabel ausgerüsteten Fahrrades nach vorne.

Das derart in Fahrtrichtung vor dem Gabelkopf angeordnete Drehgelenk dreht sich beim Einfedern, von der rechten Seite des Fahrrades betrachtet, im Uhrzeigersinn, beim Ausfedern entgegen dem Uhrzeigersinn. Die hierdurch vorgegebene Drehrichtung wirkt sich beim Überfahren von Hindernissen, wie beispielsweise einer Baumwurzel, sowie beim Herausfahren aus einer Vertiefung, beispielsweise einem Schlagloch, vorteilhaft auf das Federverhalten aus, weil die dabei entgegen der Fahrtrichtung auf die Gabelholme wirkenden Kräfte besser absorbiert werden.

Zudem wird beim Einfedern der Nachlauf des mit der erfindungsgemäßen Federgabel ausgerüsteten Fahrrads kleiner, beim Ausfedern größer. Der kleinere Nachlauf hat ein direkteres Lenkverhalten des Fahrrades zur Folge, was sich beispielsweise beim starken Abbremsen des Fahrrades mit der Vorderradbremse und dem damit verbundenen Einfedern vorteilhaft auf das Fahrverhalten und die Manövrierfähigkeit auswirken kann.

Hinzu kommt, dass bei voll eigefederter Fahrradgabel die Längsachse des Gabelschaftes und die Längsmittelachse zwischen den oberen Enden der Gabelholme (nahezu) miteinander fluchten, sodass die beim starken Abbremsen und Einfedern wirksamen Kräfte weitgehend geradlinig und mit reduzierter Materialbeanspruchung der Gabelkomponenten in den Fahrradrahmen eingeleitet werden.

Um Verschmutzungen des Federelementes zu vermeiden, kann zwischen der Gabelkrone und der Gabelbrücke eine das Federelement umhüllende Staubschutzmanschette angeordnet sein. Neben dem Schutz vor Verschmutzungen verleiht die Staubschutzmanschette dem Federelement ein verbessertes Aussehen.

Nachfolgend wird die Erfindung anhand der Figuren näher erläutert. Es zeigen
- **Figur 1**: ein Fahrrad, das mit einer erfindungsgemäßen Fahrradgabel ausgestattet ist,
- **Figur 2 A)**: eine Detaildarstellung einer ersten Ausführungsform der erfindungsgemäßen Fahrradgabel in Seitenansicht,
- **Figur 2 B)**: eine Detaildarstellung der ersten Ausführungsform der erfindungsgemäßen Fahrradgabel in Vorderansicht,
- **Figur 3**: eine Detaildarstellung einer zweiten Ausführungsform der erfindungsgemäßen Fahrradgabel in Seitenansicht.

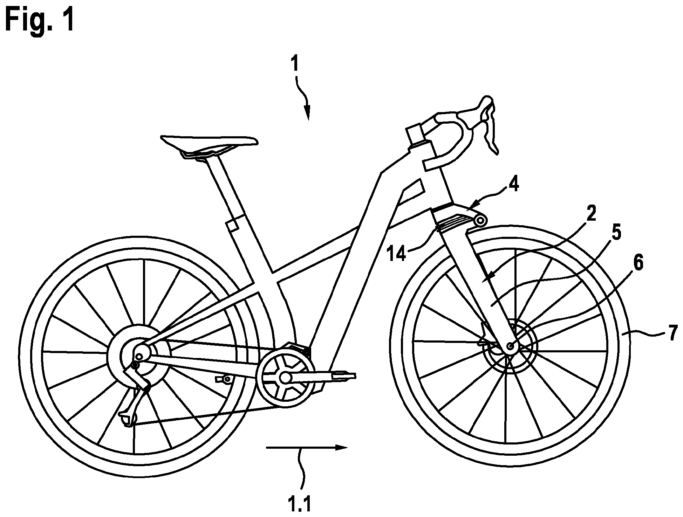

Figur 1 zeigt ein Fahrrad 1 mit einer erfindungsgemäßen Fahrradgabel 2, die als Federgabel ausgestaltet ist.

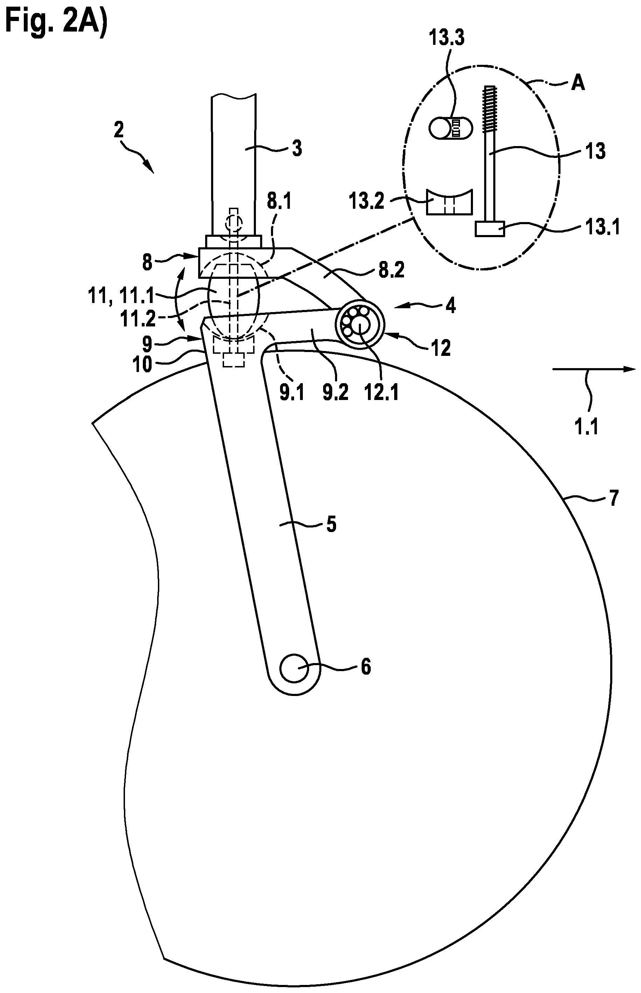

Wie am besten aus Figur 2 A) erkennbar, weist die Fahrradgabel 2 einen Gabelschaft 3, einen Gabelkopf 4 sowie im parallelen Abstand zueinander angeordnete Gabelholme 5, auf, die jeweils Ausfallenden 6 zur Befestigung des Vorderrades 7 aufweisen. Der Gabelkopf 4 ist zweiteilig und besteht aus einer Gabelkrone 8 und einer Gabelbrücke 9, wobei die Gabelkrone 8 drehfest mit dem Gabelschaft 3 verbunden ist und die Gabelbrücke 9 die Gabelholme 5 an den den Ausfallenden 6 gegenüberliegenden oberen Enden 10 fest miteinander verbindet. Im dargestellten Ausführungsbeispiel sind die beiden Gabelholme 5 und die Gabelbrücke 9 einteilig als ein Bauteil ausgeführt.

Zwischen der Gabelkrone 8 und der Gabelbrücke 9 ist ein Federelement 11, im vorliegenden Fall eine Elastomerfeder 11.1 angeordnet. Das als Block ausgebildete Federelement 11 stützt sich einerseits an einer Aufnahme 8.1 in der Gabelkrone 8 und andererseits an einer Aufnahme 9.1 in der Gabelbrücke 9 ab. Die Aufnahmen 8.1,9.1 sind muldenförmig, um die an die Muldenform angepassten, sphärisch ausgebildeten, gegenüberliegenden Stirnseiten des Federelementes 11,11.1 aufzunehmen. Durch diese Ausbildung der Aufnahmen 8.1, 9.1 und der sphärischen Stirnseiten wird die beim Einfedern erforderliche Relativbewegung unterstützt.

Die Gabelkrone 8 ist mit der Gabelbrücke 9 über ein Drehgelenk 12 verbunden, das eine Drehbewegung um eine Drehgelenksachse 12.1 erlaubt. Durch die Drehbewegung um die Drehgelenkachse 12.1 wird eine Abstandsänderung der Gabelkrone 8 gegenüber der Gabelbrücke 9 bewirkt.

Ein als Details A dargestellter Schraubbolzen 13 erstreckt sich durch einen zentralen Durchgang 11.2 in dem Federelement 11 sowie Durchgängen in der Gabelkrone 8 und der Gabelbrücke 9, wobei sich der Schraubenbolzen 13 bei Erreichen des größten Schwenkwinkels zwischen Gabelkrone 8 und Gabelbrücke 9 an einem Ende an der Gabelkrone 8 und an dem anderen Ende an der Gabelbrücke 9 als Widerlager abstützt. Die Abstützung erfolgt an einer Seite über den Schraubenkopf 13.1, gegebenenfalls mit einer Unterlegscheibe 13.2 und an der anderen Seite mittels einer Mutter 11.3. Durch die Verbindung mit dem Schraubbolzen 13 kann außerdem die Vorspannung des Federelementes 11, 11.1 eingestellt werden.

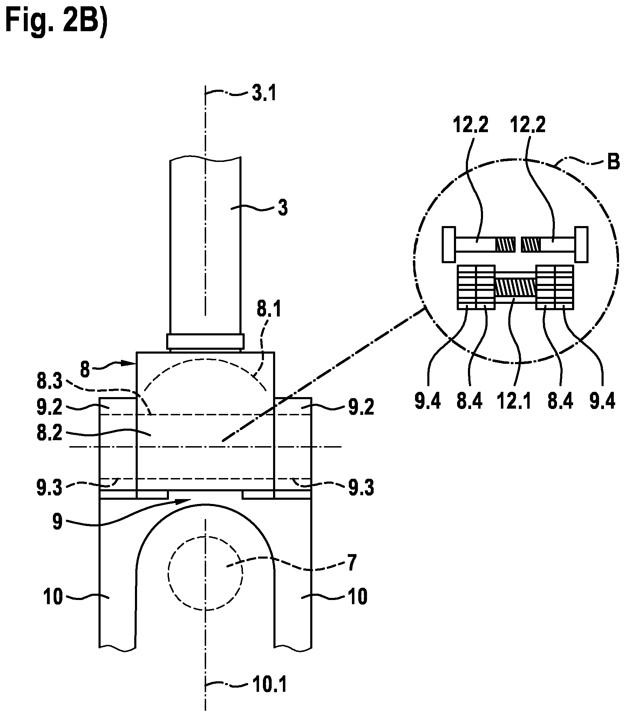

Weiter ist aus der Zusammenschau der Figuren 2 A) und 2 B) erkennbar, dass die Gabelbrücke 9 zwei im parallelen Abstand zueinander angeordnete Schwingen 9.2 aufweist, die einen Ausleger 8.2 der Gabelkrone 8 teilweise umschließen, d. h. seitlich an dem Ausleger 8.2 anliegen, wie dies aus der Vorderansicht in Figur 2 B) erkennbar ist. Der Ausleger 8.2 erstreckt sich ausgehend von dem Gabelschaft 3 in Fahrtrichtung 1.1 des Fahrrades 1 nach vorne und ist nach unten, d. h. in Richtung der Aufstandfläche des Fahrrades 1 gebogen ausgeführt.

Der Ausleger 8.2 weist eine quer zur Längsachse 3.1 des Gabelschafts 3 verlaufende, als Durchgang in dem Ausleger 8.2 ausgestaltete Achsaufnahme 8.3 für die Drehgelenkachse 12.1 auf. Die Drehgelenkachse 12.1 wird in der Achsaufnahme 8.3 mittels zwei Nadellagern 8.4 gelagert.

Die beiden Schwingen 9.2 weisen endseitig miteinander fluchtende Achsaufnahmen 9.3 für die Drehgelenkachse 12.1 auf. Die Drehgelenkachse 12.1 erstreckt sich durch die miteinander fluchtenden Achsaufnahmen 9.3 der beiden Schwingen 9.2 und die Achsaufnahme 8.3 des Auslegers 8.2. Die Drehgelenkachse 12.1 wird in den beiden Achsaufnahmen 9.3 der Schwingen 9.1 jeweils mit einem weiteren Nadellager 9.4 gelagert.

In dem Details B in Figur 2 B) sind die beiden in der Achsaufnahme 8.3 der Gabelkrone 8 angeordneten Nadellager 8.4 und die beiden in den Achsaufnahmen 9.3 der Schwingen 9.2 angeordneten Nadellager 9.4 für die Drehgelenkachse 12.1 erkennbar. Die Befestigung der Drehgelenkachse 12.1 in den Achsaufnahmen 8.3,9.3 des Drehgelenks 12 erfolgt mittels Befestigungsschrauben 12.2.

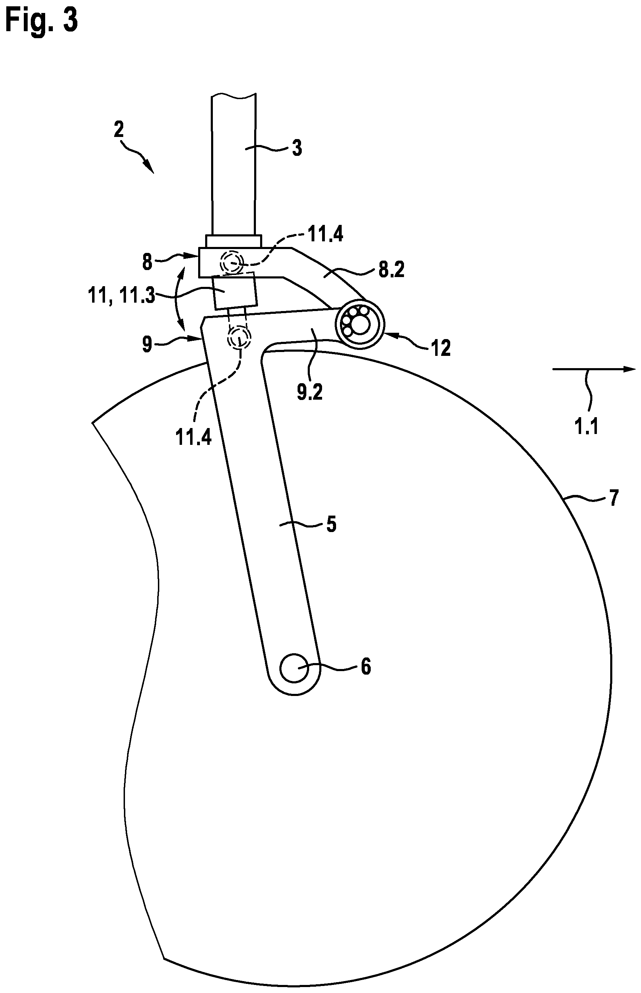

Figur 3 zeigt eine weitere Ausführungsform einer erfindungsgemäßen Fahrradgabel 2 mit einem anderen Federelement 11. Das Federelement 11 ist in dem dargestellten Ausführungsbeispiel als Federbein 11.3 ausgeführt, das an einem Ende an der Gabelkrone 8 und an dem anderen Ende an der Gabelbrücke 9 angelenkt ist. Die Anlenkung erfolgt mittels quer zur Längsachse 3.1 des Gabelschaftes 3 verlaufenden, endseitig an dem Federbein 11.3 angeordneten Gelenkverbindungen 11.4.

Im Übrigen stimmt der Aufbau des Ausführungsbeispiels der Fahrradgabel nach Figur 3 mit dem Ausführungsbeispiel der Fahrradgabel nach den Figuren 2 A), 2 B) überein, sodass auf die Ausführungen zu diesem Ausführungsbeispiel Bezug genommen wird.

In Figur 1 ist das in den Figuren 2 A), 2 B) und Figur 3 freiliegende Federelement 11 durch eine zwischen dem Gabelkrone 8 und der Gabelbrücke 9 angeordnete Staubschutzmanschette 14 umhüllt. Die Staubschutzmanschette 14 verhindert das Eindringen von Schmutz und Staub in den Zwischenraum zwischen Gabelkrone 8 und Gabelbrücke 9, verlängert dadurch die Lebensdauer und erhält die Funktion des Federelementes 11.

### Bezugszeichenliste

- 1: Fahrrad
- 1.1: Fahrtrichtung
- 2: Fahrradgabel
- 3: Gabelschaft
- 3.1: Längsachse
- 4: Gabelkopf
- 5: Gabelholme
- 6: Ausfallende
- 7: Vorderrad
- 8: Gabelkrone
- 8.1: Aufnahme
- 8.2: Ausleger
- 8.3: Achsaufnahme
- 8.4: Nadellager
- 9: Gabelbrücke
- 9.1: Aufnahme
- 9.2: Schwingen
- 9.3: Achsaufnahme
- 9.4: Nadellager
- 10: Oberes Ende
- 10.1: Längsmittelachse
- 11: Federelement
- 11.1: Elastomerfeder
- 11.2: Durchgang
- 11.3: Federbein
- 11.4: Gelenkverbindung
- 12: Drehgelenk
- 12.1: Drehgelenkachse
- 12.2: Befestigungsschrauben
- 13: Schraubenbolzen
- 13.1: Schraubenkopf
- 13.2: Unterlegscheibe
- 13.3: Mutter
- 14: Staubschutzmanschette

## Patentansprüche

1. Fahrradgabel (2) mit einem Federelement (11), umfassend einen Gabelschaft (3), einen Gabelkopf (4) und im Abstand zueinander angeordnete Gabelholme (5) mit Ausfallenden (6) zur Befestigung eines Vorderrades (7),
**dadurch gekennzeichnet, dass**
- der Gabelkopf (4) eine Gabelkrone (8) und eine Gabelbrücke (9) aufweist, wobei
- die Gabelkrone (8) drehfest mit dem Gabelschaft (3) verbunden ist und
- die Gabelbrücke (9) die Gabelholme (5) an den den Ausfallenden (6) gegenüberliegenden oberen Enden (10) miteinander verbindet,
- zwischen der Gabelkrone (8) und der Gabelbrücke (9) ein Federelement (11) angeordnet ist und
- die Gabelkrone (8) und die Gabelbrücke (9) über ein Drehgelenk (12) mit einer Drehgelenkachse (12.1) derart miteinander verbunden sind, dass eine Drehbewegung um die Drehgelenkachse (12.1) eine Abstandsänderung der Gabelkrone (8) gegenüber der Gabelbrücke(9) bewirkt.

2. Fahrradgabel (2) nach Anspruch 1, **dadurch gekennzeichnet, dass** eine Längsachse (3.1) des Gabelschafts (3) das Federelement (11) kreuzt.

3. Fahrradgabel (2) nach Anspruch 1 oder 2, **dadurch gekennzeichnet, dass** eine Längsmittelachse (10.1) zwischen den parallelen oberen Enden (10) der Gabelholme (5) das Federelement (11) kreuzt.

4. Fahrradgabel (2) nach einem der Ansprüche 1 bis 3,
**dadurch gekennzeichnet, dass** das Drehgelenk (12) in Fahrtrichtung (1.1) eines mit der Fahrradgabel (2) ausgerüsteten Fahrrades (1) vor dem Gabelschaft (3) angeordnet ist.

5. Fahrradgabel (2) nach einem der Ansprüche 1 bis 4,
**dadurch gekennzeichnet, dass** das Federelement (11) eine Elastomerfeder (11.1) ist, die sich einerseits an einer Aufnahme (8.1) in der Gabelkrone (8) und andererseits an einer Aufnahme (9,.1) in der Gabelbrücke (9) abstützt.

6. Fahrradgabel (2) nach einem der Ansprüche 1 bis 4,
**dadurch gekennzeichnet, dass** das Federelement (11) ein Federbein (11.3) ist, das an einem Ende an der Gabelkrone (8) und an dem anderen Ende an der Gabelbrücke (9) angelenkt ist.

7. Fahrradgabel (2) nach einem der Ansprüche 1 bis 6,
**dadurch gekennzeichnet, dass** der Schwenkwinkel um die Drehgelenkachse (12.1) beschränkt ist.

8. Fahrradgabel (2) nach Anspruch 5 und 7, **dadurch gekennzeichnet, dass** sich ein Bolzen (13) durch einen Durchgang (11.2) in der Elastomerfeder (11.1) sowie der Gabelkrone (8) und der Gabelbrücke (9) erstreckt, wobei sich der Bolzen (13) bei Erreichen des größten Schwenkwinkels an einem Ende mit einem Gegenstück an der Gabelkrone (8) und an dem anderen Ende mit einem Gegenstück an der Gabelbrücke (9) als Widerlager abstützt.

9. Fahrradgabel (2) nach einem der Ansprüche 1 bis 8, **dadurch gekennzeichnet, dass**
- die Gabelbrücke (9) zwei im parallelen Abstand zueinander angeordnete Schwingen (9.2) aufweist, die einen Ausleger (8.2) der Gabelkrone (8) umschließen,
- der Ausleger (8.2) eine Achsaufnahme (8.3) für die Drehgelenkachse (12.1) aufweist,
- die beiden Schwingen (9.2) endseitig miteinander fluchtende Achsaufnahmen (9.3) für die Drehgelenkachse (12.1) aufweisen,
- die Drehgelenkachse (12.1) sich durch die miteinander fluchtenden Achsaufnahmen (9.3) der beiden Schwingen (9.2) und die Achsaufnahme (8.3) des Auslegers (8.2) erstreckt
- und die Drehgelenkachse (12.1) quer zur Fahrtrichtung (1.1) eines mit der Fahrradgabel (2) ausgerüsteten Fahrrades (1) verläuft.

10. Fahrradgabel (2) nach Anspruch 9, **dadurch gekennzeichnet, dass** sich die beiden Schwingen (9.2) und der Ausleger (8.2) in Fahrtrichtung (1.1) eines mit der Fahrradgabel (2) ausgerüsteten Fahrrades (1) nach vorne erstrecken.

11. Fahrradgabel nach einem der Ansprüche 1 bis 10, **dadurch gekennzeichnet, dass** zwischen der Gabelkrone (8) und der Gabelbrücke (9) eine das Federelement (11) umhüllende Staubschutzmanschette (14) angeordnet ist.

12. Fahrrad (1), **dadurch gekennzeichnet, dass** das Fahrrad (1) eine Fahrradgabel (2) nach einem oder mehreren der Ansprüche 1-11 aufweist.
